# EUROPEAN PATENT APPLICATION

(11) **EP 2 391 102 A1**
(43) Date of publication of application: **30.11.2011**
(21) Application number: 10166621.2
(22) Date of filing: 21.06.2010
(51) Int. Cl.: H04M 1/725, H04M 1/727

(54) **Simplifying subscription and location registration of a mobile terminal**

(30) Priority: 31.05.2010 US 790943
(71) Applicant: VTech Telecommunications Limited, Tai Po, New Territory Hong Kong (CN)
(72) Inventor: Yeung, Wai Wing, Hong Kong Hong Kong (CN)
(74) Representative: Carpintero Lopez, Francisco

(57) **Abstract**

Methods, systems, and products for terminal registration with a base station. Aspects of the invention include a method for dynamically performing subscription registration. A method includes pre-storing complete subscription data into a base station; predefining general subscription data in a mobile terminal; initiating, from the terminal, a location registration when within the radio range of the base station, wherein the terminal does not contain complete subscription data, but does contain general subscription data; authorizing the terminal in dependence upon the pre-stored subscription data; and, upon successful authorization, modifying the subscription data in the terminal to correspond to the complete subscription data.

## Description

### BACKGROUND

Communication systems having mobile radio functionality (cordless and mobile telephones, for example) have gained prominence in both personal and business communications. Multiple communications systems may be connected together to form communication networks. Often, such systems (or networks of systems) include one or more mobile terminals operating in conjunction with one or more base stations, which provide the terminal with access to a greater communication network via radiofrequency communications with the terminal. Use of the mobile terminal often requires registering the terminal with an appropriate base station.

For example, in a communication system according to the Digital Enhanced Cordless Communications (`DECT') standard, subscription registration is usually required before a user can make or receive calls on the mobile terminal. Subscription registration is a process whereby a subscriber obtains access rights to one or more base stations. Obtaining access rights may be implemented by transmitting subscription data to the terminal for storage on the terminal.

A terminal will further initiate location registration with a base station located within the radio range of the terminal upon determining that the terminal has access rights to the base station. Location registration is performed to operatively couple the terminal to the base station within radio range. The terminal may compare stored subscription information with radio station identification information to determine if the terminal has access rights.

Typically, to aid in identification, a base station sends, at regular intervals, a message with information aiding the terminal in determining if the terminals has access rights. In a DECT compliant communications system, the base station broadcasts a Radio Fixed Part Identity ('RFPI') as a layer-2 message. The RFPI contains at least one primary access identifier, known as a Primary Access Rights Identity (`PARI'), and a radio station identifier, or Radio Fixed Part Number ('RPN'). If terminals of another system are permitted within the communication system, the RFPI may also include the primary access rights identity of the other system broadcasted (with a different periodicity) as a secondary access rights identity ('SARI'). Each base station in the network may broadcast a unique RFPI.

Subscription registration is typically initiated by a user. For example, in a DECT compliant cordless telephone system, subscription registration can be initiated by pressing or holding a button at a base station, which begins open registration for the base station. A handset to be paired with the base station may be kept within range of the base station while a user selects a registration option using dedicated buttons, soft keys, and/or menus, and the like. In response, the handset searches all RFPIs. When an RFPI is found, the handset sends a subscription registration request. The base station authenticates the handset, and, upon successful authentication, the handset and base station exchange system information. This system information includes subscription data sent from the base station to the handset.

Subscription data associated with the terminal may be stored in the terminal. The terminal uses this subscription data to determine if the terminal has access rights to a particular base station for the purpose of local registration. In a DECT compliant terminal, the subscription data may include a portable access rights key ('PARK') and a PARK length indicator ('PLI'). In accordance with the DECT standard, the terminal compares the PARI of a received RFPI with the PARK stored in subscription memory to determine if the PARI and the PARK correspond. If the outcome of the comparison is negative, the terminal compares the SARI of a received RFPI with the PARK. Upon a positive outcome, the terminal determines it has access rights and initiates location registration procedures with the base station.

In some instances, after a PARI has been updated, the old PARI may be broadcast as a SARI to allow connection to the network for purposes of updating the PARK to correspond to the updated PARI.

### SUMMARY

Methods, systems, and computer products for terminal registration with a base station are disclosed herein. Aspects of the invention include a method for dynamically performing subscription registration. This dynamic subscription registration may be performed initially with system or network setup, or when adding handsets to an existing network. The subscription registration may be performed automatically when powering up a handset, requiring no additional actions by a user.

In one general embodiment, a method includes pre-storing complete subscription data into a base station; predefining general subscription data in a mobile terminal; initiating, from the terminal, a location registration when within the radio range of the base station, wherein the terminal does not contain complete subscription data, but does contain general subscription data; authorizing the terminal in dependence upon the pre-stored subscription data; and, upon successful authorization, modifying the subscription data in the terminal to correspond to the complete subscription data. Authorizing the terminal may further be carried out in dependence upon the general subscription data.

In another general embodiment, a method includes broadcasting via the base station a radio fixed part identity with primary access rights identity as a layer-2 message with a first periodicity and a general access rights identity as a layer-2 message with a second periodicity; comparing, in the terminal, at least a predetermined part of the primary access rights identity and, respectively, of the general access rights identity in the terminal with at least a part of stored subscription data; registering the terminal at the base station as a home terminal for a positive result of the comparison of a predetermined part of the primary access rights identity; and registering the terminal at the base station as a home terminal in response to at least a positive result of the comparison of a predetermined part of the general access rights identity. The method may further include modifying the stored subscription data in the terminal to correspond to the PARI in response to at least a positive result of the comparison of the predetermined part of the general access rights identity. The method may be carried out upon system initialization and may be limited in time, or until all expected mobile terminals have registered. The general access rights identity is available in limited circumstances (such as system set-up) and is correlated with predefined general subscription data on the terminal. The general access rights identity may be a secondary access rights identity.

In some implementations, the method may also include transmitting from the terminal to the base station a stored international portable user identity upon a positive result of the comparison of a predetermined part of the general access rights identity; and comparing the transmitted international portable user identity with a record of approved international portable user identities stored in a memory operatively coupled to the base station. Registering the terminal at the base station as a home terminal may be carried out in response to a positive result of the comparison of the international portable user identity with the list of approved international portable user identities in addition to a positive result of the comparison of a predetermined part of the general access rights identity. In some implementations, after each approved international portable user identity has been transmitted to the base station, the broadcast of the general access rights identity is ended.

Other general embodiments include a communications system adapted for terminal registration according to the above method. The system may comprise one or more data processing systems comprising a processor and a computer memory operatively coupled to the processor. The computer memory of one or more of the computers has disposed within it computer program instructions for execution on the processor to implement one or more of the method embodiments described above.

Other general embodiments include a computer readable medium with computer readable program code disposed thereon. The computer readable program code comprises computer program instructions (written in programming languages, microcode, and the like) which when executed on a processor enable a system to perform the method described above.

The foregoing and other objects, features and advantages of the disclosure will be apparent from the following more particular descriptions of example embodiments of the invention as illustrated in the accompanying drawings wherein like reference numbers generally represent like parts of example embodiments of the invention.

### BRIEF DESCRIPTION OF THE DRAWINGS

FIG. 1 sets forth a communication network for terminal registration according to embodiments of the present invention.

FIG. 2 sets forth a data flow diagram illustrating a method for terminal registration according to embodiments of the present invention.

FIG. 3 sets forth a flow chart illustrating a method for terminal registration according to embodiments of the present invention.

### DETAILED DESCRIPTION

The description of various embodiments of the present invention is presented for purposes of illustration and description, but is not intended to be limiting to the invention in the form disclosed. Many modifications and variations will be apparent to those of ordinary skill in the art. The particular choice of illustrated embodiment described herein is made in order to best explain the invention and the practical application, and to enable others of ordinary skill in the art to understand the invention.

Embodiments of the present invention pertain generally to terminal registration in a communications network including a base station and a mobile terminal. In normal operation, the terminal has subscription data stored thereon corresponding to its approved base station. The base station and terminal may be approved for use together due to being specifically manufactured and sold to be used together, through a later designation as part of a larger network, as a later designation to prevent accidental or malicious integration with a separate network, and so on, as will occur to those of skill in the art. The terminal uses this subscription data to negotiate a location registration with a particular base station.

In some instances, such as system initialization, the terminal lacks the required subscription information. Historically, in that case, a subscription registration operation would be initiated to provide the proper subscription information to the terminal. Subscription registration may be initiated by a user. For example, a user may initiate subscription registration by pressing or holding a button at a base station, which begins open registration for the base station and selecting a registration option on the terminal to be paired with the base station. The terminal is kept within range of the base station, and the terminal searches all RFPIs. When an RFPI is found, the terminal sends a subscription registration request. The base station authenticates the terminal, and, upon successful authentication, the terminal receives subscription data from the base station. Once the terminal obtains the subscription data, the terminal may negotiate a location registration. Over time, use of the separate subscription registration operation has proven to be inefficient.

Aspects of the present invention include a method for dynamically performing terminal registration so that if subscription information is lacking in the terminal, the terminal acquires the subscription information during location registration.

Embodiments of the present invention include a base station containing complete subscription data, which may be pre-stored on the base station. This complete subscription data may include an RFPI as typically used in accordance with the DECT standard, as well as general subscription data. General subscription data is a default subscription data allowing registration only in specific, limited circumstances. For example, the general subscription data may only allow registration during specific periods, such as, for example, during initialization. The subscription data may also include a unique terminal identifier associated with each approved terminal. Further embodiments of the invention include a mobile terminal having general subscription data (correlated to the general subscription data on the base station) predefined on the mobile terminal.

According to aspects of the invention, the terminal, in accordance with the DECT standard, initiates a location registration when within the radio range of a base station. The base station authorizes the terminal on the basis of the subscription data stored thereon, and modifies the subscription data stored on the terminal so that the subscription data correlates to the RFPI.

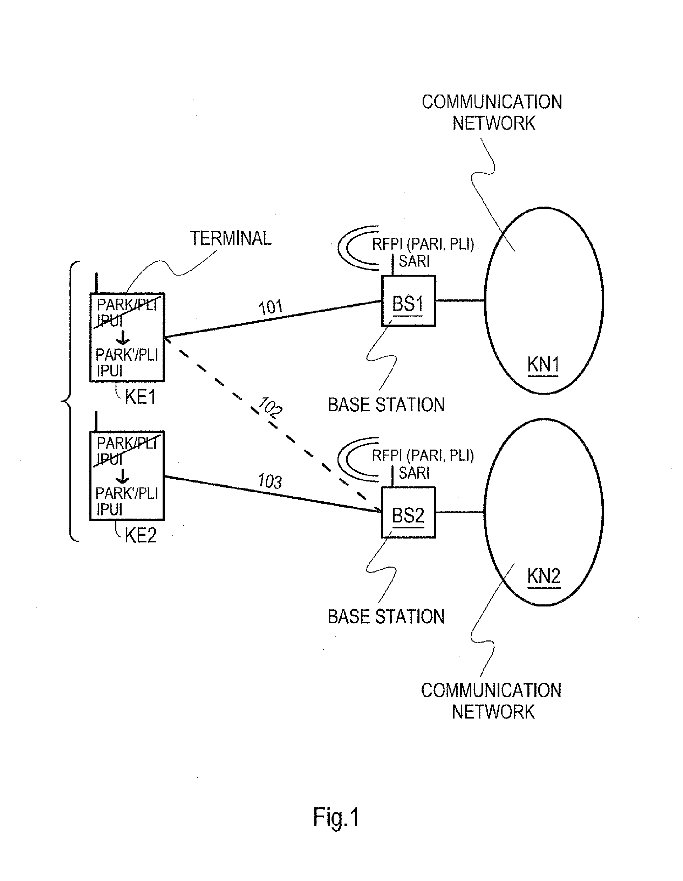

FIG. 1 sets forth communication networks KN1 and KN2, in which is implemented the method of the present invention. The communication networks KN1, KN2 may be, for example, public communication networks, private communication networks, private branch exchanges, or any combination of these. Each communication network KN1, KN2 comprises, respectively, a base station BS1, BS2 and a terminal KE1, KE2. The base stations BS1, BS2 provide an over-the-air radio frequency communication interface for the respective communication network.

In normal operation, terminal KE1 is approved to communicate with the communication network KN1 via radio frequency communications 101 to and from base station BS1, and terminal KE2 is approved to communicate with the communication network KN2 via radio frequency communications 103 with base station BS2. These respective communications are possible because the respective terminals are within radio range of the respective base stations. Terminal KE1 is also within radio range of base station BS2, and therefore has physical communications capability 102 with BS2, although actual communications between terminal KE1 and BS2 are limited because fully functional communications between them lack approval.

Approved communications are enabled through the use of access rights. The communication networks KN1, KN2 may operate in accordance with the DECT standard, in which case, each of the terminals KE1 and KE2 obtain access rights to their respective appropriate base stations BS1, BS2. In DECT compliant systems, these access rights are implemented through subscription data stored in the respective terminals. Each terminal is associated with a unique international portable user identity ('IPUI'), which is stored as subscription data. The stored subscription data also includes a PARK and PLI for each terminal KE1, KE2.

To provide for registration of the terminal KE1 at the base station BS1, the base station BS 1 broadcast an RFPI as a layer-2 message at a first periodicity. The base station BS2 also broadcasts a different RFPI as a layer-2 message at a different periodicity. The respective RFPIs contain a PARI and RPN. Terminals KE1 and KE2 located within transmitting/receiving range of the base stations BS1 and BS2 compare a received PARI and, if necessary, the PLI with at least a part of the subscription data stored within them. If the result of the comparison is positive, the terminal registers at the respective base station with the aid of a location registration message. For example, the terminal KE1 comparing the PARI broadcast from BS1 results in a positive comparison, and thus the terminal KE1 registers at the base station BS1 I through use of a location registration message to BS1.

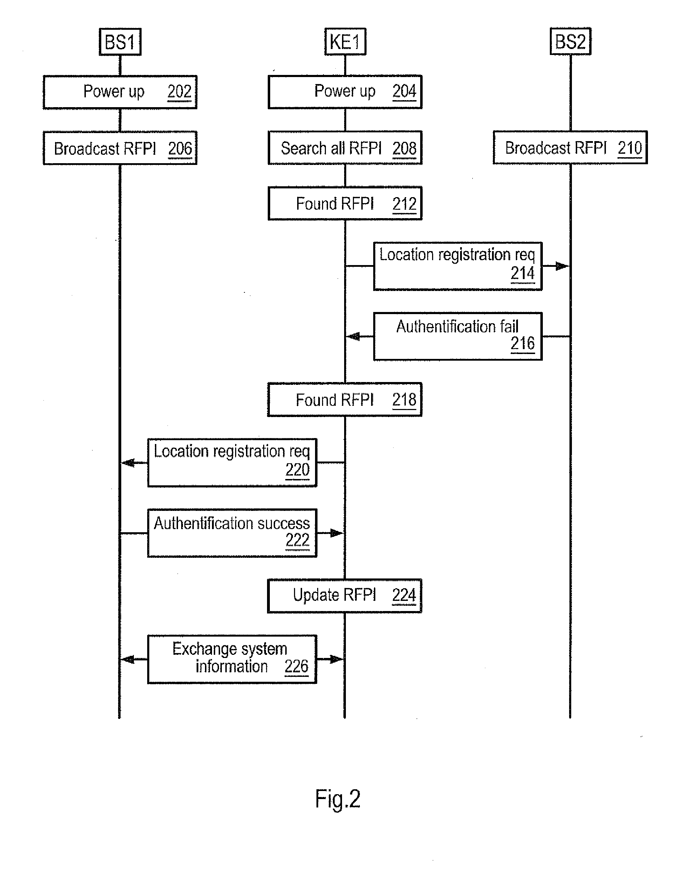

Figure 2 sets forth a data flow diagram illustrating terminal registration in accordance with embodiments of the present invention. In normal operation, terminal KE1 has subscription data stored thereon corresponding to its approved base station. However, in some instances (such as system initialization), the terminal KE1 subscription data has not yet been provided. To begin initialization, both base station BS1 and terminal KE1 are powered up (block 202, 204). To provide for registration of the terminal KE1 at the base station BS1, the base station BS1 broadcasts an RFPI (block 206). The base station BS2 broadcasts a different RFPI to enable registration of terminal KE2 (not shown) (block 210). Upon powering up, KE1 searches all RFPIs (block 208). KE1 finds the RFPI broadcast by base station BS2 (block 212), and attempts location registration by sending a location registration request (block 214). Because BS2 lacks the subscription data corresponding to the predefined subscription information in terminal KE1, the authentication fails and a failed authentication message is sent back to terminal KE1 (block 216).

KE 1 then finds the RFPI broadcast by base station BS1 (block 218), and attempts location registration by sending a location registration request (block 220). Because terminal KE1 lacks the complete subscription data at start-up, nominal access to base station BS1 by the terminal KE1 is not possible. No subscription data on KE1 matches the RFPI with the PARI broadcast by the base station BS1.

In one embodiment, the base station BS1 broadcasts a general access rights identity ('GARI'). This GARI corresponds to the general subscription data contained in terminal KE1. In one embodiment, the base station broadcasts the GARI as a secondary access rights identity ('SARI') with a second periodicity, in the form of a layer-2 message. The GARI may be broadcast less frequently than the nominal RpPI. When the terminal KE1 receives this GARI, it compares it with its predefined subscription data PARK, PLI, IPUI and registers at the base station BS1 in the form of a location registration LR. In response, the communication network performs authentication. The communication network KN1 then recognizes by means of the IPUI of the terminal KE1 that this terminal registered as a visiting terminal is a home terminal, the subscription data of which have not yet been updated to complete subscription data corresponding to the complete subscription data on base station BSI.

The comparison between the subscription data on BS1 and the predefined general subscription information in terminal KE1 is positive, so the authentication succeeds and an authentication success message is sent back to terminal KE1 I (block 222). In response to the positive comparison, the base station BS1 updates the RFPI to include a PARK and PLI corresponding to the RFPI of base station BS1 (block 224) and exchange system information to effect the location registration (block 226).

In some implementations, the update is carried out by the terminal KE1 sending an updating request message AM to the base station BS1, whereupon the base station BS1 sends an accept message containing the updated subscription data PARK', PLI, IPUI. The subscription data PARK, PLI, IPUI stored in the terminal KE1 are then changed into the subscription data PARK', PLI, IPUI.

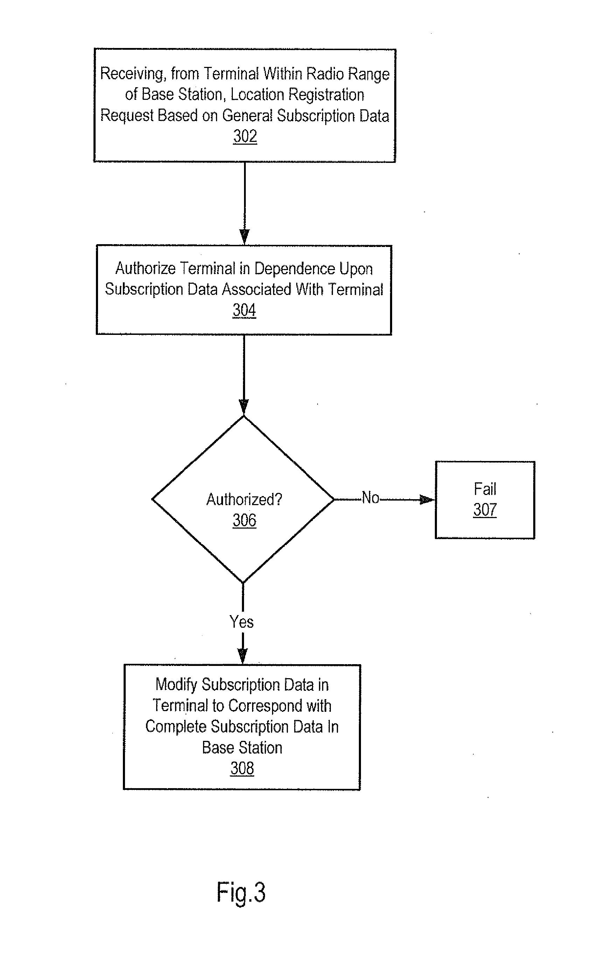

FIG. 3 is a flow chart illustrating a method for terminal registration in accordance with embodiments of the invention. The method includes receiving, from a terminal within the radio range of the base station, a location registration request based on general subscription data stored in the terminal (block 302); authorizing the terminal in dependence upon at least subscription data stored in the base station associated with the terminal (block 304); and, upon successful authorization (block 306), modifying the subscription data in the terminal to correspond to complete subscription data stored in the base station (block 308). If authorization is not successful, the operation fails (block 307).

The general subscription data stored in the terminal may be predefined for the purpose of allowing dynamic registration of a terminal without primary subscription data. The method may further include broadcasting an identifier correlating to the general subscription data to prompt the location registration request.

For example, broadcasting an identifier may be carried out by broadcasting via the base station a radio station identifier including a general radio station identifier. Broadcasting a radio station identifier may be carried out by broadcasting via the base station a radio fixed part identity with primary access rights identity as a layer-2 message with a first periodicity and a general access rights identity as a layer-2 message with a second periodicity.

Authorizing the terminal in dependence upon at least subscription data stored in the base station associated with the terminal (block 304) may include authorizing the terminal in dependence general subscription data stored in the base station corresponding to the general subscription data stored in the terminal, identification information transmitted from the terminal, (such as, for example, the IUPI), combinations of these, and/or any other criteria as will occur to those of skill in the art.

Authorizing the terminal may be carried out by comparing, in the terminal, at least a predetermined part of the primary access rights identity and, respectively, of the general access rights identity in the terminal with at least a part of stored subscription data; and registering the terminal at the base station as a visiting terminal in response to at least a positive result of the comparison of a predetermined part of the general access rights identity.

Modifying the subscription data in the terminal to correspond to complete subscription data stored in the base station (block 306) may be carried out by modifying the stored subscription data in the terminal to correspond to the PARI.

Embodiments of the present invention may be implemented as several hardwired circuits, as design structures on a medium or implemented on one or more Integrated Circuits ('ICs'), as one or more software modules executing on any number of embedded processors, or stored on a computer readable medium, or any combination of any of these. The resulting IC chip may be integrated with other chips, discrete circuit elements, and/or signal processing devices as part of either (a) an intermediate product, such as a controller, or (b) an end product. The end product can be any product that carries out the method as described above, such as toys, cordless telephones, mobile phones, cellular networks, computers, and so on. Further embodiments include a communications system adapted for terminal registration according to the above method. The system may comprise one or more of the end products described, or any other data processing systems, such as those comprising a processor and a computer memory operatively coupled to the processor. The computer memory of one or more of the computers may have disposed within it computer program instructions for execution on the processor to implement one or more of the method embodiments described above.

It should be understood that the inventive concepts disclosed herein are capable of many modifications. To the extent such modifications fall within the scope of the appended claims and their equivalents, they are intended to be covered by this patent.

## Claims

1. A computer-implemented method for registration of a mobile terminal at a base station of a communication system, the method comprising:
broadcasting via the base station a radio fixed part identity with primary access rights identity as a layer-2 message with a first periodicity and a general access rights identity as a layer-2 message with a second periodicity;
comparing, in the terminal, at least a predetermined part of the primary access rights identity and, respectively, of the general access rights identity in the terminal with at least a part of stored subscription data;
registering the terminal at the base station as a home terminal for a positive result of the comparison of a predetermined part of the primary access rights identity; and
registering the terminal at the base station as a visiting terminal in response to at least a positive result of the comparison of a predetermined part of the general access rights identity.

2. The method of claim 1 wherein broadcasting the general access rights identity is carried out upon system initialization.

3. The method of claim 1 further comprising modifying the stored subscription data in the terminal to correspond to the primary access rights identity in response to at least a positive result of the comparison of the predetermined part of the general access rights identity.

4. The method of claim further comprising:
transmitting from the terminal to the base station a stored international portable user identity upon a positive result of the comparison of a predetermined part of the general access rights identity; and
comparing the transmitted international portable user identity with a list of approved international portable user identities stored in a memory operatively coupled to the base station;
and
wherein registering the terminal at the base station as a home terminal in response to at least a positive result of the comparison of a predetermined part of the general access rights identity comprises registering the terminal at the base station as a home terminal upon a positive result of the comparison of a predetermined part of the general access rights identity and a positive result of the comparison of the international portable user identity with the list of approved international portable user identities.

5. The method of claim 1 wherein, after each approved international portable user identity in a list of approved international portable user identities has been transmitted to the base station, the broadcast of the general access rights identity is ended.

6. The method of claim 1 wherein the general access rights identity comprises a secondary access rights identity.

7. A computer program product for registration of a mobile terminal at a base station of a communication system, the computer program product comprising:
a computer readable storage medium having computer readable program code embodied therewith, the computer readable program code comprising:
computer readable program code for broadcasting via the base station a radio fixed part identity with primary access rights identity as a layer-2 message with a first periodicity and a general access rights identity as a layer-2 message with a second periodicity;
computer readable program code for comparing, in the terminal, at least a predetermined part of the primary access rights identity and, respectively, of the general access rights identity in the terminal with at least a part of stored subscription data;
computer readable program code for registering the terminal at the base station as a home terminal for a positive result of the comparison of a predetermined part of the primary access rights identity; and
computer readable program code for registering the terminal at the base station as a visiting terminal in response to at least a positive result of the comparison of a predetermined part of the general access rights identity.

8. The computer program product of claim 7 wherein computer readable program code for broadcasting the general access rights identity is executed upon system initialization.

9. The computer program product of claim 7 further comprising computer readable program code for modifying the stored subscription data in the terminal to correspond to the primary access rights identity in response to at least a positive result of the comparison of the predetermined part of the general access rights identity.

10. The computer program product of claim 7 further comprising:
computer readable program code for transmitting from the terminal to the base station a stored international portable user identity upon a positive result of the comparison of a predetermined part of the general access rights identity; and
computer readable program code for comparing the transmitted international portable user identity with a list of approved international portable user identities stored in a memory operatively coupled to the base station; and
wherein computer readable program code for registering the terminal at the base station as a home terminal in response to at least a positive result of the comparison of a predetermined part of the general access rights identity comprises computer readable program code for registering the terminal at the base station as a home terminal upon a positive result of the comparison of a predetermined part of the general access rights identity and a positive result of the comparison of the international portable user identity with the list of approved international portable user identities.

11. The computer program product of claim 7 further comprising computer readable program code for ending the broadcast of the general access rights identity after each approved international portable user identity in a list of approved international portable user identities has been transmitted to the base station.

12. The computer program product of claim 7 wherein the general access rights identity comprises a secondary access rights identity.

13. A system for migrating logical partitions, the system comprising:
a processor; and
a computer memory operatively coupled to the processor, the computer memory having disposed within it:
computer readable program code for broadcasting via the base station a radio fixed part identity with primary access rights identity as a layer-2 message with a first periodicity and a general access rights identity as a layer-2 message with a second periodicity;
computer readable program code for comparing, in the terminal, at least a predetermined part of the primary access rights identity and, respectively, of the general access rights identity in the terminal with at least a part of stored subscription data;
computer readable program code for registering the terminal at the base station as a home terminal for a positive result of the comparison of a predetermined part of the primary access rights identity; and
computer readable program code for registering the terminal at the base station as a visiting terminal in response to at least a positive result of the comparison of a predetermined part of the general access rights identity.

14. The system of claim 13 wherein computer readable program code for broadcasting the general access rights identity is executed upon system initialization.

15. The system of claim 13 wherein the memory has further disposed upon it computer readable program code for modifying the stored subscription data in the terminal to correspond to the primary access rights identity in response to at least a positive result of the comparison of the predetermined part of the general access rights identity.

16. The system of claim 13 wherein the memory has further disposed upon it:
computer readable program code for transmitting from the terminal to the base station a stored international portable user identity upon a positive result of the comparison of a predetermined part of the general access rights identity; and
computer readable program code for comparing the transmitted international portable user identity with a list of approved international portable user identities stored in a memory operatively coupled to the base station; and
wherein computer readable program code for registering the terminal at the base station as a home terminal in response to at least a positive result of the comparison of a predetermined part of the general access rights identity comprises computer readable program code for registering the terminal at the base station as a home terminal upon a positive result of the comparison of a predetermined part of the general access rights identity and a positive result of the comparison of the international portable user identity with the list of approved international portable user identities.

17. The system of claim 13 wherein the memory has further disposed upon it computer readable program code for ending the broadcast of the general access rights identity after each approved international portable user identity in a list of approved international portable user identities has been transmitted to the base station.

18. The system of claim 13 wherein the general access rights identity comprises a secondary access rights identity.
